# EUROPÄISCHE PATENTANMELDUNG

(11) **EP 4 817 798 A1**
(43) Veröffentlichungstag der Anmeldung: **07.10.2026**
(21) Anmeldenummer: 25168421.3
(22) Anmeldetag: 04.04.2025
(51) Int. Cl.: B25D 17/02, B28D 1/26

(54) **MEISSEL**

(71) Anmelder: Hilti Aktiengesellschaft, 9494 Schaan (LI)
(72) Erfinder: HORVÁTH, Bálint, 6000 Kecskemét (HU); RAKONCZAI, Gabor, 6042 Fülöpháza (HU); TAJTHI, Norbert, 2740 Abony (HU); SOBIECH, Matthias, 88131 Bodolz-Bettnau (DE)
(74) Vertreter: Hilti Aktiengesellschaft Corporate Intellectual Property

(57) **Zusammenfassung**

Meißel (1) zur Bearbeitung von Gestein und/ oder gesteinsartigem Werkstoff. Der Meißel (1) umfasst einen Schaft (10), der sich entlang einer Längsachse (L) erstreckt, einen Verbindungsabschnitt (20), der an einem ersten Ende des Schafts (10) angeordnet und einen Arbeitsabschnitt (30), der an einem zweiten Ende des Schafts (10) angeordnet ist, das dem ersten Ende des Schafts (10) gegenüber liegt. Die Längsachse (L) verläuft durch den Verbindungsabschnitt (20), den Schaft (10) und den Arbeitsabschnitt (30). Der Arbeitsabschnitt (30) weist einen Arbeitsendbereich (32) und einen Arbeitsführungsabschnitt (33) auf. Der Arbeitsendbereich (32) ist an einem Ende des Arbeitsabschnitts (30) angeordnet, welches dem Schaft (10) gegenüberliegt. Weiterhin ist der Arbeitsendbereich (32) in Erstreckung der Längsachse (L) in einer ersten Richtung vom Schaft (10) an einem freien Ende (31) des Arbeitsabschnitts (30) mit verjüngender Querschnittsfläche ausgebildet. Der Arbeitsführungsabschnitt (33) ist zwischen dem Arbeitsendbereich (32) und dem Schaft (10) angeordnet. Der Schaft (10) weist einen Schaftführungsabschnitt (12) und einen Schaftübergangsabschnitt (11) auf. Der Schaftübergangsabschnitt (11) ist an einem Ende des Schafts in Längsrichtung der Längsachse (L) zum Arbeitsabschnitt (30) ausgebildet, und der Schaftführungsabschnitt (12) ist zwischen dem Schaftübergangsabschnitt (11) und dem Verbindungsabschnitt (20) ausgebildet und verbindet den Schaftführungsabschnitt (12) mit dem Arbeitsführungsabschnitt (33). Der Arbeitsabschnitt (30) weist wenigstens zwei Arbeitsabschnittstaubkanäle (34) auf, die sich jeweils als Rille (35) in Längserstreckung der Längsachse (L) des Arbeitsabschnitts (30) erstrecken. Der Schaft (10) weist zumindest zwei Schaftstaubkanäle (14) auf, die sich zumindest partiell über den Schaft (10) in Längserstreckung der Längsachse (L) erstrecken, wobei die Schaftstaubkanäle (14) jeweils korrespondierend zu den Arbeitsabschnittstaubkanäle (34) ausgebildet sind und ineinander fluchten.

## Beschreibung

Die Erfindung betrifft einen Meißel, der einen Schaft, einen Verbindungsabschnitt und einen Arbeitsabschnitt aufweist, wobei der Schaft sich entlang einer Längsachse erstreckt und einen im Wesentlichen kreisförmigen Querschnitt hat, der Verbindungsabschnitt an einem ersten Ende des Schafts angeordnet ist, der Arbeitsabschnitt an einem zweiten Ende des Schafts angeordnet ist, das dem ersten Ende des Schafts gegenüber liegt.

Weiterhin betrifft die Erfindung ein Verfahren zum Nachschärfen eines Meißels.

### Stand der Technik

Meißel werden an Baustellen zur meißelnden Bearbeitung von mineralischem Gestein, beispielsweise Beton, Ziegel oder Stein, eingesetzt. Die Meißel werden an einer Arbeitsmaschine, wie einem Bohrhammer, Schlagbohrschrauber, Abbruchhammer oder Meißelhammer eingespannt. Während der Arbeitsausführung an einer Arbeitsposition kann es dazu kommen, dass sich der Meißel im Gestein festsetzt. Dies führt in der Regel dazu, dass der Meißel nicht mehr aus einem hineingearbeiteten Loch entfernt werden kann. Zudem ist eine weitere Bearbeitung des Gesteins nicht oder zumindest kaum noch möglich. Deshalb muss die Arbeit meist unterbrochen werden und der Meißel vom Gestein befreit werden.

Aus der WO2024120950A1 ist beispielsweise ein Meißel zur Bearbeitung von Gestein bekannt. Der Meißel weist Rippen am Arbeitsabschnitt zum Abtransport von Meißelstaub auf. Zudem weist der Meißel am Arbeitsabschnitt eine bauchförmige Verdickung auf, um ein Festsetzen zu verhindern.

Mit Meißel des Standes der Technik ist ein Festsetzen an seiner Schneide vorerst verhindert. Jedoch verschleißt das Arbeitsende des Meißels, nämlich seine Schneide, während der Materialbearbeitung. Dies führt zu einer Verschlechterung der Arbeitsparameter, wie die bereitgestellte Energie zur Spaltung des Materials an dem Arbeitsende. Zudem wird bei fortlaufendem Einsatz Meißelstaub, d. h. das abgearbeitete Material immer weniger gut vom Arbeitsort wegtransportiert. Deshalb läuft der Meißel wieder Gefahr, während der Bearbeitung festzusetzen.

### Offenbarung der Erfindung

Es ist deshalb eine Aufgabe der Erfindung, einen verbesserten Meißel anzugeben, mit dem ein zu bearbeitendes Material möglichst lange unterbrechungsfrei bearbeitet werden kann, ohne dass der Meißel festsitzt.

Gelöst wird die Aufgabe durch einen Meißel gemäß der Merkmalskombination des unabhängigen Anspruchs. Besonders vorteilhafte Ausgestaltungen sind in den abhängigen Ansprüchen angegeben.

Die Lösung der Aufgabe sieht einen Meißel vor, der einen Schaft, einen Verbindungsabschnitt und einen Arbeitsabschnitt aufweist, wobei eine Längsachse durch den Verbindungsabschnitt, Schaft und Arbeitsabschnitt verläuft. Der Schaft erstreckt sich entlang der Längsachse. Der Verbindungsabschnitt ist an einem ersten Ende des Schafts angeordnet. Der Arbeitsabschnitt ist an einem zweiten Ende des Schafts angeordnet, welches dem ersten Ende des Schafts gegenüber liegt. Das zweite Ende des Schafts liegt dem ersten Ende des Schafts gegenüber.

Der Meißel weist am Arbeitsabschnitt einen Arbeitsendbereich und einen Arbeitsführungsabschnitt auf. Der Arbeitsendbereich ist an einem freien Ende des Arbeitsabschnitts angeordnet, welches vom Schaft weg gerichtet ist. Der Arbeitsendbereich ist in Erstreckung der Längsachse in einer ersten Richtung vom Verbindungsabschnitt zum Arbeitsabschnitt an dem freien Ende des Arbeitsabschnitts mit verjüngender Querschnittsfläche ausgebildet. Der Arbeitsendbereich ist das Arbeitsende des Meißels zur Bearbeitung eines Materials an einer Arbeitsposition. Der Arbeitsführungsabschnitt ist entlang der Längsachse zwischen dem Arbeitsendbereich und dem Schaft angeordnet.

Weiterhin ist der Meißel ausgebildet, dass der Schaft einen Schaftführungsabschnitt und einen Schaftübergangsabschnitt aufweist, wobei der Schaftübergangsabschnitt an einem Ende des Schafts in Längsrichtung der Längsachse zum Arbeitsabschnitt hin ausgebildet ist. Der Schaftführungsabschnitt ist zwischen dem Schaftübergangsabschnitt und dem Verbindungsabschnitt ausgebildet und verbindet den Schaftführungsabschnitt mit dem Arbeitsführungsabschnitt.

Vorzugsweise ist der Schaft mit dem Schaftführungsabschnitt und dem Schaftübergangsabschnitt monolithisch.

Der Arbeitsabschnitt weist wenigstens zwei Arbeitsabschnittstaubkanäle auf, die sich jeweils als Rille in Längserstreckung der Längsachse des Arbeitsabschnitts erstrecken. Der Schaft weist zumindest zwei Schaftstaubkanäle auf, die sich zumindest partiell über den Schaft in Längserstreckung der Längsachse erstrecken, wobei die Schaftstaubkanäle jeweils korrespondierend zur den Arbeitsabschnittstaubkanäle ausgebildet sind und ineinander fluchten.

Die Staubkanäle des Meißels erstrecken sich somit vom Arbeitsabschnitt bis zumindest teilweise über den Schaft. Feiner und grober Meißelstaub können über einen großen Abstand von der Arbeitsposition abtransportiert werden. Dabei sorgen die Arbeitsabschnittstaubkanäle für einen effizienten Abtransport von durch das Meißeln abgetragenen grob und feinkörnigen Staub aus der Arbeitsposition, d.h. von dem Arbeitsendbereich weg. Der Abtransport geschieht durch die Meißelbewegungen des Meißels und damit einer Beschleunigung des Staubs in Richtung des Schafts, so dass ein freigestemmtes Material vom Arbeitsendbereich des Meißels zertrümmert wird und als feiner und grober Staub von dem Arbeitsendbereich in Richtung des Schafts bewegt wird. Außerdem ermöglicht erneut weiteres freigestemmtes Material einen Nachschub in den Arbeitsabschnittstaubkanäle und damit ein weiteres Bewegen des Materials in den Arbeitsabschnittstaubkanälen zum Schaft hin. Zudem sorgen die Arbeitsabschnittstaubkanäle dazu, dass ein Freiraum zwischen dem Arbeitsabschnitt und den zu meißelnden Gegenstand bleibt.

In den Arbeitsabschnittstaubkanälen wird der Meißelstaub zu den Schaftstaubkanälen geführt. Die Arbeitsstaubabschnittstaubkanäle korrespondieren mit den Schaftstaubkanälen und fluchten zueinander. Somit erstrecken sich die Arbeitsabschnittstaubkanälen zu den Schaftstaubkanälen und werden von diesen fortgeführt. Somit wird der von den Arbeitsabschnittstaubkanälen transportierte Meißelstaub an die Schaftstaubkanäle weitergeleitet und ohne Unterbrechung transportiert. Die Schaftstaubkanäle transportieren den Meißelstaub weiter von der Arbeitsposition weg. Die Schaftstaubkanäle haben analog den gleichen Effekt wie die Arbeitsabschnittstaubkanäle und führen entsprechend fein und grobkörnigen Staub vom Arbeitsabschnitt in Richtung des Verbindungsbereichs.

Auch wenn hier beschrieben ist, dass die Schaftstaubkanäle und/ oder die Arbeitsabschnittstaubkanäle Staub abführen, so ist darunter zu verstehen, dass im Wesentlichen Staub von der Arbeitsposition abgeführt wird. Soweit der Meißel bei der Bearbeitung von Material, bspw. Gestein, bereits innerhalb des Materials ist, beispielswiese in einem Loch, führen die Arbeitsabschnittstaubkanäle und/ oder Schaftstaubkanäle den Staub von der Arbeitsposition so weit in Richtung des Verbindungsabschnitts des Materials weg, wenigstens so weit wie in der Regel der Meißel in dem Material ist und Arbeitsabschnittstaubkanäle und/ oder Schaftstaubkanäle noch über das Material hinausragen. Sobald der durch die Arbeitsabschnittstaubkanäle und/ oder Schaftstaubkanäle transportiere Staub einen Abschnitt des Meißels erreicht, der nicht mehr in dem Material, bspw. Gestein, ist, wird der Staub durch die Bewegung des Meißels ebenfalls vom Meißel weggeschleudert. Somit wird der Staub vorrangig in den Arbeitsabschnittstaubkanälen und/ oder Schaftstaubkanälen bewegt, soweit der Meißel auch im Material ist.

Ein Festsetzen des Meißels wird damit verhindert. Weiterhin wird verhindert, dass freigestemmtes Material am Arbeitsendbereich durch den Meißel dort wieder verdichtet wird.

Die Schaftstaubkanäle sind vorzugsweise jeweils als Rille ausgebildet, insbesondere als Vertiefung in der Außenwand des Schafts.

Grundsätzlich handelt es sich bei einer Vertiefung um eine lokale Einbuchtung oder Senke gegenüber einer benachbarten Außenwand. Eine Vertiefung weist dementsprechend eine Tiefe gegenüber der Außenwand des Arbeitsabschnitts auf.

In einer Ausgestaltung ist vorgesehen, dass die Schaftstaubkanäle mehrere Abschnitte aufweisen, wobei die Schaftstaubkanäle am Schaftübergangsabschnitt als Schaftübergangsstaubkanäle ausgebildet sind und die Schaftstaubkanäle am Schaftführungsabschnitt als Schaftführungsstaubkanäle ausgebildet sind. Die Schaftübergangsstaubkanäle sind korrespondierend zu den Schaftführungsstaubkanälen ausgebildet und fluchten zueinander. Somit laufen die Schaftüberübergangsabschnitte in den Schaftführungsstaubkanälen weiter. Die Schaftübergangsstaubkanäle erstrecken sich in Längserstreckung der Längsachse über eine Außenwand des Schaftübergangsabschnitts des Schafts. Die Schaftführungsstaubkanäle erstrecken sich zumindest partiell über eine Außenwand des Schaftführungsabschnitts des Schafts.

Mit dieser Ausgestaltung ist sichergestellt, dass Staub von der Arbeitsposition bis zum Schaftführungsabschnitt transportiert wird, ohne dass der Meißel im Material festsitzt. Da sich die Schaftstaubkanäle bis zum Schaftführungsabschnitt erstrecken, erweitert dies den Einsatzbereich des Meißels, da im Vergleich zu einem Meißel des Standes der Technik eine Arbeitsposition erreichen kann, die deutlich tiefer im Material des zu bearbeitenden Objekts ist, ohne dass der Meißel aufgrund des Meißelstaubs festsitzt.

Weiterhin weist der Schaftübergangsabschnitt eine erste Außenwand auf. Der Schaftführungsabschnitt weist eine zweite Außenwand auf welche zugleich eine Mantelfläche des Schaftführungsabschnitts dargestellt. Der Arbeitsführungsabschnitt weist die dritte Außenwand auf, welche zugleich eine Mantelfläche des Arbeitsführungsabschnitts dargestellt. Die erste Außenwand des Schaftübergangsabschnitts ist derart ausgebildet, die zweite Außenwand (des Schaftführungsabschnitts) mit der dritten Außenwand (des Schaftübergangsabschnitts) zu verbinden.

In einer Ausgestaltung weist der Schaftführungsabschnitt einen ersten Außendurchmesser, betrachtet senkrecht zur Längsachse, auf. Der Arbeitsführungsabschnitt weist einen zweiten Außendurchmesser auf, betrachtet senkrecht zur Längsachse. Der erste Außendurchmesser ist größer als der zweite Außendurchmesser. Vorzugsweise beträgt der zweite Außendurchmesser 15% weniger als der erste Außendurchmesser des Schaftführungsabschnitts.

Der Schaftübergangsabschnitt weist hinsichtlich seiner ersten Außenwand einen dritten Außendurchmesser auf. Der dritte Außendurchmesser verkleinert sich vorzugsweise vom Schaftführungsabschnitt zum Arbeitsführungsabschnitt in Richtung vom Schaftführungsabschnitt zum Arbeitsführungsabschnitt. Der dritte Außendurchmesser des Schaftübergangsabschnitts ist demnach über seine Längserstreckung entlang der Längsachse variabel.

In einer Ausgestaltung ist vorgesehen, dass die größte Steigung der ersten Außenwand des Schaftübergangsabschnitts vom Arbeitsabschnitt zum Schaftführungsabschnitt gegenüber der Längsachse des Meißels kleiner als 90° insbesondere kleiner als 45° und vorzugsweise zwischen 20° und 10°. Die Steigung ist vorzugsweise konstant, wobei an einem Übergangsbereich vom Arbeitsführungsabschnitt zum Schaftübergangsabschnitt und/ oder vom Schaftübergangsabschnitt zum Schaftführungsabschnitt die Steigung der ersten Außenwand des Schaftübergangsabschnitts variierend ausgebildet ist, um jeweils einen sanften Übergang in Form eines Bogens auszubilden.

Mithilfe der Erweiterung des Außendurchmessers vom Arbeitsführungsabschnitt zum Schaftführungsabschnitt ist es möglich, dass bei ausreichender Meißeltiefe, d.h. der Meißel ist in diesem Fall bis zum Schaftübergangsabschnitt tief im zu bearbeitenden Material eingedrungen, die Außenwand des Schaftübergangsabschnitts weiteres Material abplatzt und zusätzlich zum Spalten des Materials beiträgt.

In einer Ausgestaltung ist vorgesehen, die erste Außenwand des Schaftübergangsabschnitts einen im Wesentlichen stetigen Verlauf zwischen der zweiten Außenwand des Schaftführungsabschnitts und der dritten Außenwand des Arbeitsführungsabschnitts aufweist.

Selbst wenn vorliegend von einem Durchmesser, beispielsweise dem ersten, zweiten und dritten Außendurchmesser, die Rede ist, so bedingt dies nicht zwangsweise, dass es sich der Durchmesser auf einen Körper mit einem kreisförmigen Querschnitt bezieht. Der Begriff ist so auszulegen, dass der Durchmesser einen Abstand zur Längsachse definiert. So wäre der Begriff Außendurchmesser als Abstand eines Punkts der Außenwand senkrecht zur Längsachse zu verstehen. Werden mehrere Außendurchmesser in Relation zueinander beschrieben, so sind dabei Punkte an einer oder mehrere Außenwände zu verstehen, die in gleicher Flucht in Längserstreckung der Längsachse liegen und beispielsweise jeder auf einer gemeinsam mit der Längsachse aufgespannten Ebene liegen. Der Schaftführungsabschnitt, der Schaftübergangsabschnitt und/ oder Arbeitsführungsabschnitt können jeweils eine ellipsenförmige Querschnittsfläche senkrecht zur Längsachse, eine kreisförmige Querschnittsfläche senkrecht zur Längsachse oder eine mehreckige Querschnittsfläche senkrecht zur Längsachse aufweisen, wobei die mehreren Ecken, beispielsweise sechs, vorzugsweise regelmäßig radial zur Längsachse angeordnet sind.

Der Arbeitsführungsabschnitt und/ oder der Schaftführungsabschnitt sind in einer Ausgestaltung so ausgebildet, dass die entsprechende Außenwand (dritte bzw. zweite Außenwand) im Wesentlichen parallel zur Längsachse verläuft.

In einer Ausgestaltung weist der Meißel am Arbeitsabschnitt wenigstens zwei Arbeitsabschnittstaubkanäle auf, die als Rille an der Außenwand des Arbeitsabschnitts, insbesondere an der zweiten Außenwand des Arbeitsführungsabschnitts, ausgebildet sind. Die Arbeitsabschnittstaubkanäle erstrecken sich vorzugsweise als Vertiefung in Längserstreckung der Längsachse. Dabei ist zu verstehen, dass die Arbeitsabschnittstaubkanäle als lokale Einbuchtung oder Senke gegenüber einer Außenwand des Arbeitsabschnitts ausgebildet sind und dementsprechend eine Tiefe gegenüber der Außenwand des Arbeitsabschnitts aufweisen. Diese Ausbildung der Arbeitsabschnittstaubkanäle lässt einen besonders zuverlässigen Transport des Meißelsaubs von der Arbeitsposition weg zu. Weiterhin kann mithilfe mehrerer Arbeitsabschnittstaubkanäle mehr Meißelstaub abtransportiert werden. In einer Ausgestaltung sind vier Arbeitsabschnittstaubkanäle ausgebildet, die mit vier Schafttaubkanälen korrespondieren.

In einer Ausführung weist der Arbeitsführungsabschnitt in einem Übergangsbereich zwischen Arbeitsführungsabschnitt zum Schaftübergangsabschnitt erste Querschnittsfläche auf, welche sich senkrecht zur Längsachse erstreckt. Weiterhin weist der Schaft eine erste Querschnittsfläche an einem Übergangsbereich vom Schaftübergangsabschnitt zum Schaftführungsabschnitt auf, welche sich senkrecht zur Längsachse erstreckt. Die erste Querschnittsfläche des Arbeitsführungsabschnitts beträgt dabei maximal 90% der zweiten Querschnittsfläche des Schafts.

Vorzugsweise sind der Arbeitsführungsabschnitt und/ oder der Schaftführungsabschnitt zylindrisch ausgebildet. Die erste und/ oder zweite Querschnittsfläche sind beispielsweise kreisförmig oder ellipsenförmig ausgebildet. Die Achsen des Arbeitsführungsabschnitts und/ oder der Schaftführungsabschnitts verlaufen deckungsgleich mit der Längsachse.

In einer besonderen Ausgestaltung weisen die Schaftstaubkanäle an einer Übergangsstelle zu den Arbeitsabschnittstaubkanälen ein gleiches Querschnittsprofil senkrecht zur Längsrichtung auf, wie die Arbeitsabschnittstaubkanäle.

In einer Ausgestaltung weist die Außenfläche des Arbeitsabschnitts in einem Übergang zu den Arbeitsabschnittstaubkanälen eine Erhöhung, vorzugsweise eine wulstartige Erhöhung auf. In einer weiteren Ausgestaltung weist die Außenfläche des Schafts im Übergang zu den Schaftstaubkanälen eine Erhöhung, vorzugsweise eine wulstartige Erhöhung auf. Die Erhöhung an dem Übergang erstreckt sich vorzugsweise über einen Bereich zwischen einer Randbegrenzung in Längserstreckung der Schaftstaubkanäle und/ oder der Arbeitsabschnittstaubkanäle und den entsprechenden Außenflächen des Schafts bzw. des Arbeitsabschnitts. Dies verringert weiterhin ein Festsetzen des Meißels in dem zu bearbeitenden Material.

In einer Ausgestaltung ist vorgesehen, dass die Erhöhung der Wulst an einem lokalen Abschnitt wenigstens 10% einer maximalen Tiefe der jeweiligen Staubkanäle des betreffenden lokalen Abschnitts entspricht. D.h., dass die Erhöhung der Wulst am Übergang von den Schaftführungsstaubkanälen zur Außenwand des Schaftführungsabschnitts, die Erhöhung der Wulst am Übergang von den Schaftübergangstaubkanälen zur Außenwand des Schaftübergangsabschnitts und die Erhöhung der Wulst am Übergang von der Arbeitsabschnittstaubkanälen zu der Außenwand der Arbeitsführungsabschnitts wenigstens 10% der Tiefe der jeweiligen Staubkanälen, nämlich der Schaftführungsstaubkanälen, der Schaftübergangstaubkanälen bzw. der Arbeitsabschnittstaubkanälen, beträgt.

In einer Ausgestaltung ist die Verjüngung keilförmig flach so ausgebildet, dass sie am Arbeitsende eine längliche Schneide ausbildet. Der damit gebildete Meißel kann somit auch als sogenannter Flachmeißel gesehen werden. Die Verjüngung kann einen mehrstufigen Verlauf mit wenigstens einer Ebene und/ oder einen Abschnitt mit einer gekrümmten Fläche aufweisen.

In einer Ausgestaltung ist vorgesehen, dass der Arbeitsendbereich des Arbeitsabschnitts spitz zulaufend ausgebildet ist. In einer Ausführungsform ist der Arbeitsendbereich kegelförmig ausgebildet, so dass die Spitze des Kegels im Wesentlichen auf der Längsachse liegt und von dem Verbindungsabschnitt weggerichtet ist. Diese Form eignet sich besonders dafür, Krafteintrag von dem Verbindungsabschnitt, an dem eine Arbeitsmaschine einen Kraftimpuls in Längsrichtung vom Verbindungsabschnitt zum Arbeitsabschnitt einleitet, punktuell über die Spitze auf das zu bearbeitende Material zu leiten. Somit wird anhand der Spitze möglichst viel bereitgestellte Schlagkraft auf eine kleine Fläche übertragen. Die Kegelform hilft besonders beim Eindringen des Meißels in das Material, insbesondere Gestein.

In einer Ausgestaltung ist der Arbeitsendbereich prismatisch mit einer Spitze ausgebildet ist, insbesondere pyramidenförmig mit wenigstens drei, vorzugsweise vier oder sechs, Seitenflächen ausgebildet ist. Dabei liegt die Spitze des prismatischen Arbeitsendbereichs auf der Längsachse und zeigt vom Verbindungsabschnitt weg. Die Seitenkanten des prismatischen, insbesondere pyramidenförmigen Arbeitsendbereichs, sorgen für eine zusätzliche Keilwirkung beim Eindringen des Meißels in das zu bearbeitende Material, so dass das Material an der Arbeitsposition nahezu mechanisch weggesprengt wird. Gegenüber einem Meißel mit kegelförmigem Arbeitsendbereich, der eher zum Festsetzen neigt, wird durch wenigen Seitenkanten die Möglichkeit zum Festsetzen verringert.

Es hat sich herausgestellt, dass ein pyramidenförmiger Arbeitsendbereich mit vier bis acht Seitenkanten, insbesondere vier bis sechs Seitenkanten, vorzugsweise vier Seitenkanten, die Seitenkanten zur Keilwirkung entgegen dem Festsetzen nutzt und gleichzeitig die Vorteile eines Meißels mit kegelförmigen Arbeitsendbereich ideal kombiniert. Deshalb ist in einer Ausführungsform mit einem pyramidenförmigen Arbeitsendbereich mit vier Seitenkanten bzw. vier Seitenflächen ausgebildet.

Grundfläche des Kegelstumpfs oder des Pyramidenstumpfs erstreckt sich senkrecht zur Längsachse. Die Deckfläche des Kegelstumpfs oder des Pyramidenstumpfs weist vom Verbindungsabschnitt weg. Somit wird die von der Werkzeugmaschine eingeleitet Schlagkraft nicht wie bei einem spitz zulaufenden Arbeitsendbereich punktuell, sondern auf eine kleine Fläche übertragen. Vorzugsweise beträgt die Fläche der Deckfläche maximal 30% der Grundfläche, insbesondere maximal 10% und besonders bevorzugt maximal 5%. Insbesondere bei der Bearbeitung, von porösem Material, beispielsweise bei Aufbrucharbeiten oder Abbrucharbeiten, kann hier aufgrund des flächigen Krafteintrags eine Kombination von punktueller und flächiger Schlageinwirkung erzielt werden. Das Material platzt regelrecht von der zu bearbeitenden Oberfläche weg und der Meißel dringt zudem in das Material gut ein. Hier hat sich bei Gesteinsmaterial ein Flächenmaß von 0,2 bis 2 mm² als besonders wirksam herausgestellt.

Besonders beim Nachschärfen des Meißels, insbesondere des Arbeitsabschnitts, ist ein hoher Temperatureintrag von 250°C bis hin zu 500°C möglich. In einer Ausführung ist vorgesehen, dass der Meißel nachschärfbar ausgebildet ist, wobei besonders der Arbeitsabschnitt, insbesondere Arbeitsendabschnitt, zum Nachschärfen bestimmt ist. In einer Ausgestaltung weist der Arbeitsabschnitt, insbesondere dessen Arbeitsende, ein Material auf, dessen Härte in einem Temperaturbereich von 0°C bis wenigstens 250°C, insbesondere in einem Temperaturbereich von 0°C bis 500°C im Wesentlichen gleich bleibt. Der Arbeitsabschnitt ist dazu ausgebildet, nach wenigstens drei, vorzugsweise zehn, Vorgänge zum Nachschärfen und einem damit bedingten Temperatureintrag von maximal 500°C seine bisherige Härte im Wesentlichen beizubehalten.

Dass der Arbeitsabschnitt seine Härte im Wesentlichen beibehält, bedeutet, dass die Verwendungshärte des Arbeitsabschnitts sich um weniger als 15%, insbesondere von weniger als 5%, vorzugsweise von weniger als 3%, von der Anfangshärte, welche der Arbeitsabschnitt nach Herstellung des Meißels aufweist, unterscheidet. Vorzugsweise beträgt die Anfangshärte 210 bis 240 HB bzw. 45-55 HRC bei Raumtemperatur. Insbesondere beträgt die Reduktion der Härte (Verwendungshärte) des Arbeitsabschnitts nach dem dritten, vorzugsweise nach dem zehnten, Nachschleifen weniger als 15%, insbesondere weniger als 5%, vorzugsweise weniger als 3%, von der Anfangshärte.

Ein Nachschärfen bedingt wie oben erwähnt durch das damit verbundene abrasive Formgebungsverfahren ebenfalls einen lokalen Temperatureintrag in das Material. Für das Nachschärfen des erfindungsgemäßen Meißels ist deshalb in der Regel ein Temperatureintrag von bis wenigstens 250°C, insbesondere von bis zu 500°C über einen Zeitbereich von 30 s bis 60 s relevant und zu betrachten. Der Temperatureintrag findet nicht gleichmäßig im Material des gesamten Arbeitsabschnitts statt, sondern vorrangig in dem Bereich, an dem das Nachschärfen durchgeführt wird, beginnend an den entsprechenden Oberflächen. Insbesondere betrifft dies die Meißelkante oder Meißelspitze. Somit ist für das Nachschärfen auch eine entsprechende lokale Temperaturerhöhung als gleichbedeutend und analog zu betrachten

In einer Ausgestaltung ist der Arbeitsabschnitt aus einer Stahllegierung, dessen Gefüge sowie die Verteilung ihrer Phasen sich durch Temperatureintrag beim Nachschärfen lokal nicht derart verändern, dass die Härte der Stahllegierung negativ beeinflusst wird. Insbesondere wird dabei auch nicht die Beschaffenheit und Verteilung der Mischkristalle verändert.

Dies hat zur Folge, dass beim Nachschärfen des Meißels nicht nur die die Form des Arbeitsendes zur Materialbearbeitung hergestellt wird. Zudem bleibt die Härte des Arbeitsabschnitts im Wesentlichen gleich, so dass bei nachfolgendem Bearbeiten des Gesteins sich der Meißel nicht schneller als zur ersten Bereitstellung des Meißels nach dessen Herstellen abnutzt. Der Meißel kann nachgeschärft werden, ohne dass seine Materialeigenschaften negativ beeinflusst werden. Selbst nach mehrmaligem Nachschärfen wird der Meißel nicht signifikant weicher. Der Meißel ist somit länger einsetzbar und nutzt sich sowohl bei der Bearbeitung von Gestein als auch beim Nachschärfen nicht so stark ab. Auch kann der Arbeitsabschnitt im Feld, d.h. auf der Baustelle oder durch einen bauarbeitenden Betrieb genauer nachgeschärft werden, was zu einer verbesserten Formgebung führt. Im Gegensatz zu Meißel des Standes der Technik somit auch der Vorgang zum Nachschärfen erleichtert, denn zusätzliche Kühlapparaturen zur Verhinderung der Härteänderung durch Temperatureintrag fallen weg.

Die Stahllegierung des Arbeitsabschnitts gemäß der Erfindung ist insbesondere ein hochlegierter martensitischer Chromstahl. Beispielsweise handelt es sich um einen X40CrMoV 5-1 Stahl.

Die Stahllegierung des Arbeitsabschnitts gemäß der Erfindung ist insbesondere ein hochlegierter martensitischer Chromstahl. Beispielsweise handelt es sich um einen X40CrMoV 5-1 Stahl.

In einer Ausgestaltung weist die Stahllegierung des Arbeitsabschnitts Molybdän und/ oder Vanadium als Legierungselemente auf. In einer Ausgestaltung als Stahllegierung des Arbeitsabschnitts ein martensitischer Chromstahl mit Vanadium und Molybdän als Legierungselemente. Molybdän dient in der Stahllegierung der Ausbildung von Karbiden, insbesondere Chromkarbide. Chromkarbide erhöhen eine höhere Härte der Stahllegierung bei Temperaturen bis zu 500°C, insbesondere in einem Temperaturbereich von 250°C bis 500°C. In der Stahllegierung des Arbeitsabschnitts bewirkt Vanadium als Legierungspartner In der Stahllegierung des Arbeitsabschnitts liegt Vanadium zusammen mit Kohlenstoff als Vanadiumcarbid vor. Vanadium und/ oder Vanadiumkarbid erzeugt dabei unter anderem eine feine Mikrostruktur des Gefüges. Dies erhöht die Festigkeit, Verschleißfestigkeit sowie Zähigkeit der Stahllegierung. Vorzugsweise beträgt der Anteil an Vanadium in der Stahllegierung bis zu etwa 1%. Vorzugsweise beträgt der Anteil von Molybdän und/ oder Vanadium maximal 2% vorzugsweise 1%. Es hat sich herausgestellt, dass ein Anteil von Molybdän von etwa 1 % bis 1,5 % optimal ist.

Ein schnelleres Nachschärfen bedingt oftmals einen schnelleren und höheren Temperatureintrag. Deshalb ist in einer Ausführungsform vorgesehen, dass das Material des Arbeitsabschnitts eine gleichbleibende Härte in einem Temperaturbereich von 0°C bis 500°C aufweist.

In einer Ausgestaltung ist der erfindungsgemäße Meißel mehrteilig ausgeführt. Die jeweiligen Teile können mittels Form,- Kraft- und/ oder Stoffschluss verbunden sein.

In einer Ausführungsform ist der Meißel dreiteilig ausgeführt, wobei der Verbindungsabschnitt, der Schaft und der Arbeitsabschnitt separat hergestellt sind und zur Herstellung und Verwendung des Meißels zusammengesetzt sind.

In einer Ausführungsform sind der Verbindungsabschnitt und der Schaft einteilig und der Arbeitsabschnitt separat ausgeführt. Dabei ist der Schaft mit dem Arbeitsabschnitt bevorzugt mittels Stoffschluss, insbesondere mittels Schweißen, verbunden. In einer bevorzugten Ausführungsform sind der Arbeitsabschnitt mittels Ultraschallschweißen, Reibschweißen und/ oder Induktionsschweißen verbunden. Reibschweißen hat sich als Schweißvorgang besonders vorteilhaft erwiesen, da die Herstellung des Meißels besonders kostengünstig und einfach möglich ist. Der Meißel weist an dem Bereich der Verbindung zwischen Schaft und Arbeitsabschnitt eine Schweißzone auf. Aufgrund des Stoffschlusses ist die Schweißzone in der Regel keine harte Grenze, sondern bildet einen Übergangsbereich mit einer Materialmischung der Materialien des Arbeitsabschnitts und des Schafts, ähnlich einer Diffusionszone.

Die mehrteilige Ausführung hat den Vorteil, dass für jeden Abschnitt nach Abschnitt ein der Verwendung und Beanspruchung angepasstes Material bereitgestellt werden kann. So ist beispielsweise für den Arbeitsabschnitt das oben genannte Härte-Temperatur-beständige Material verwendet wird, wobei für den Schaft und den Verbindungsabschnitt ein anderes Material bereitgestellt werden kann, beispielsweise mit höherer Elastizität für die Verwendung am Schaft. Insbesondere kann der Meißel so hinsichtlich Kosten und technischer Anwendung und Anforderung angepasst werden. Als mögliches Material für den Schaft und/ oder Verbindungsabschnitt ist vorzugsweise ein hochlegierter Stahl umfassend wenigstens eins der Legierungselemente Chrom, Silizium, Molybdän, Nickel, vorzugsweise wenigstens Chrom mit einem anderen Legierungspartner. Beispielsweise wird als Material für den Schaft 45SiCrV6, 42CrMo4 oder 34CrNiMo6 verwendet.

### Kurze Beschreibung der Figuren

In den Figuren zeigen:
Fig. 1 eine schematische Darstellung eines Ausführungsbeispiels eines erfindungsgemäßen Meißels;
Fig. 2 eine schematische Darstellung des Meißels aus Fig. 1 in einer Seitenansicht;
Fig. 3 eine schematische Schnittansicht entlang der Schnittlinie A-A aus Fig. 2;
Fig. 4 eine schematische Schnittansicht entlang der Schnittlinie B-B aus Fig. 2;
Fig. 5 eine schematische Schnittansicht entlang der Schnittlinie C-C aus Fig. 2; und
Fig. 6 ein Verfahren zur Verwendung eines erfindungsgemäßen Meißels und zu dessen Nachschärfen.

### Ausführliche Beschreibung der Figuren

In der nachfolgenden Beschreibung der Figuren werden zur Erleichterung des Verständnisses für gleiche oder sich funktional entsprechende Elemente über die verschiedenen Figuren hinweg jeweils die gleichen Bezugszeichen verwendet.

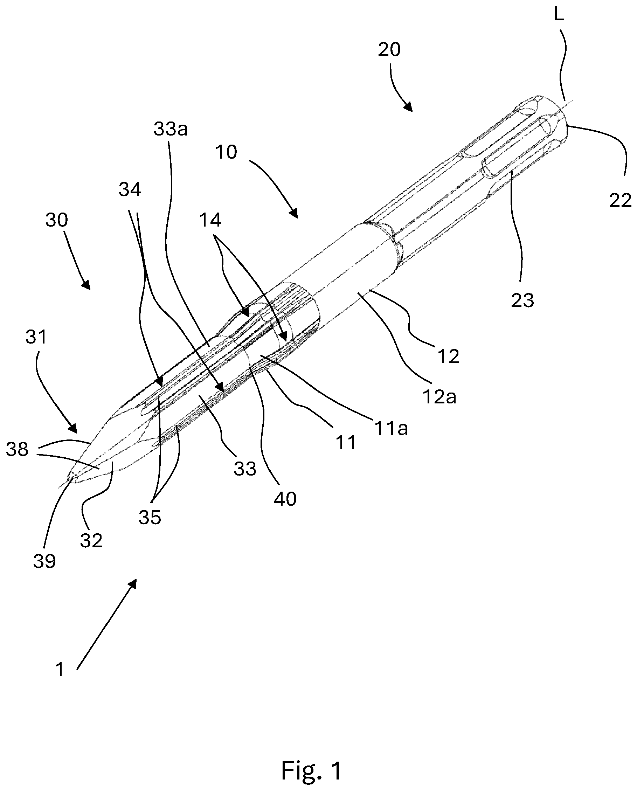

In der Fig. 1 ist eine schematische dreidimensionale Darstellung eines Ausführungsbeispiels eines Meißels 1 gemäß der Erfindung dargestellt. Der Meißel 1 umfasst einen Verbindungsabschnitt 20, einen Schaft 10 und einen Arbeitsabschnitt 30.

Der Verbindungsabschnitt 20 weist an einem freien Ende, welches dem Schaft 10 gegenüberliegt, eine Schlagfläche 22 auf.

Durch den Arbeitsabschnitt 30, den Schaft 10 und den Verbindungsabschnitt 20 sowie seiner Schlagfläche 22 verläuft eine Längsachse L. Der Meißel 1 kann durch Schläge auf die Schlagfläche 16, beispielsweise anhand einer Werkzeugmaschine, wie Bohrhammer, Schlagbohrschrauber, Abbruchhammer oder Meißelhammer, in ein Material, insbesondere Gestein, eingetrieben werden. Dazu weist der Meißel 1 an dem Verbindungsabschnitt 20 einen Einsteckbereich 23 auf, das im vorliegenden Beispiel der Fig. 1 als Sechskant ausgebildet ist. Der Einsteckbereich 23 weist Nuten für den Eingriff und die Verbindung mit der Werkzeugmaschine auf.

Der Arbeitsabschnitt 30 weist entlang der Längsachse L ein erstes Ende und ein zweites Ende auf, wobei das erste Ende dem Schaft 10 zugeordnet ist und das zweite Ende eine freien Ende 31 des Arbeitsabschnitts 30 zugeordnet ist und dem Schaft 10 gegenüber liegt. Der Arbeitsabschnitt 30 ist über sein erstes Ende mit einem zweiten Ende des Schafts 10 verbunden. Dem zweiten Ende des Schafts 10 liegt ein erstes Ende des Schafts 10 gegenüber. An dem ersten Ende des Schafts 10 ist der Verbindungsabschnitt 20 angeordnet.

Der Arbeitsabschnitt 30 umfasst entlang der Längsachse L angrenzend zum Schaft 10 einen Arbeitsführungsabschnitt 33. Weiterhin weist der Arbeitsabschnitt 30 entlang der Längsachse L angrenzend zum Arbeitsführungsabschnitt 33 einen Arbeitsendbereich 32.

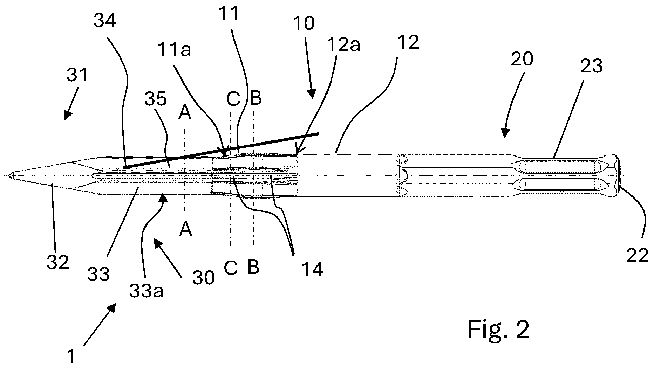

Der Arbeitsendbereich 32 ist pyramidenförmig ausgebildet. Der Arbeitsendbereich 32 weist vier Seitenflächen 38 und eine Spitze 39 auf, durch die sich die Längsachse L erstreckt. Der pyramidenförmige Arbeitsendbereich 32 ist mehrstufig geformt, so dass die verjüngende Erstreckung zur Spitze 39 einen Knick aufweisen, d.h. die vier Seitenflächen 38 weisen jeweils einen Knick auf, so dass die Steigung der Seitenflächen 38 im Bezug zur Längsachse L nicht linear verläuft. In dem vorliegenden Ausführungsbeispiel der Fig. 2 beträgt die Steigung der Seitenflächen 38 auf der der Spitze zugewandten Seite des Arbeitsendbereichs 32 30° und die Steigung der Seitenflächen 38 auf der dem Schaft 10 zugewandten Seite des Knicks des Arbeitsendbereichs 32 beträgt 12°. In einer alternativen, nicht dargestellten Ausführungsvariante weisen die Seitenflächen 38 jeweils keinen Knick auf, so dass die Steigung der Seitenflächen 38 stetig verläuft.

Im vorliegenden Ausführungsbeispiel der Fig. 1 ist der Arbeitsführungsabschnitt 33 vorwiegend zylindrisch ausgebildet, d.h. die Kontur einer Außenwand des Arbeitsführungsabschnitts 33a erstreckt sich im Wesentlichen parallel zur Längsachse L.

Der Schaft 10 weist einen Schaftübergangsabschnitt 11 und einen Schaftführungsabschnitt 12 auf. Der Schaftübergangsabschnitt 11 ist am zweiten Ende des Schafts 10 angeordnet, d.h. der Schaftübergangschnitt 11 ist angrenzend zum Arbeitsabschnitt 30 angeordnet. Am ersten Ende des Schafts 10, welches dem Verbindungsabschnitt 20 zugeordnet ist, ist der Schaftführungsabschnitt 12 ausgebildet.

Der Schaftführungsabschnitt 12 ist im vorliegenden Ausführungsbeispiel zylindrisch ausgebildet, d.h. die Kontur einer Auswand des Schaftführungsabschnitts 12a erstreckt sich im Wesentlichen parallel zur Längsachse L.

Entlang der Außenwand des Arbeitsführungsabschnitts 33a erstrecken sich in Richtung der Längsachse L vier Arbeitsabschnittstaubkanäle 34, die rillenartig ausgebildet sind. Entsprechend weist der Arbeitsführungsabschnitt 33 vier Rillen 35 auf.

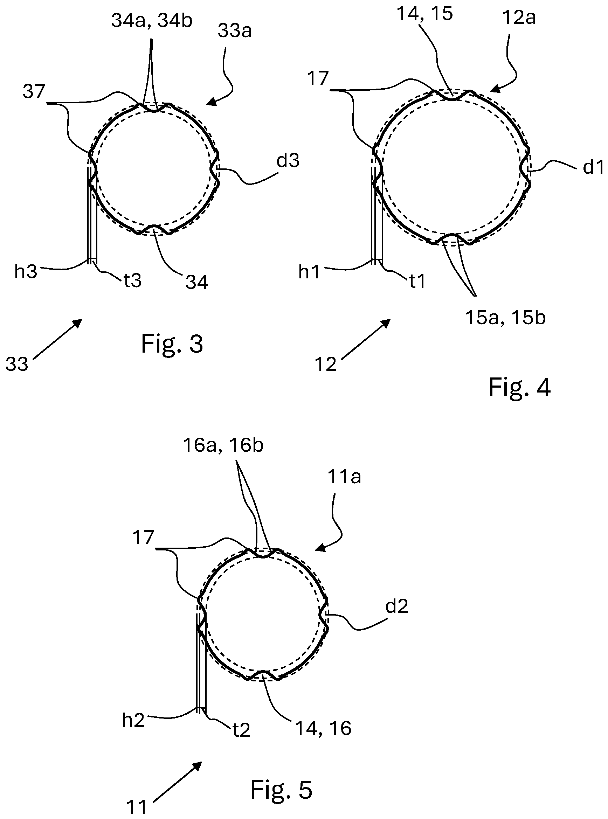

Weiterhin weist der Schaft 10 Schaftstaubkanäle 14 auf. Die Schaftstaubkanäle 14 erstrecken sich parallel zur Längsachse L an der Außenwand des Schafts 14 und sind in diesem Ausführungsbeispiel rillenartig ähnlich den Rillen 35 ausgebildet. Die Schaftstaubkanäle 14 erstrecken sich vollständig in Längsrichtung der Längsachse L über den Schaftübergangsabschnitt 11 und teilweise über den Schaftführungsabschnitt 12. Dabei bilden die Schaftstaubkanäle 14 eine Verlängerung der Arbeitsabschnittstaubkanäle 34. Nach ca. 40% bis 50% der Längserstreckung des Schafts 10 laufen die Schaftstaubkanäle 14 von dem Arbeitsabschnitt 30 aus. D.h., die rillenartige Vertiefung nähert sich immer mehr der Außenwand des Schaftführungsabschnitts 12a und die Tiefe t1 der Schaftstaubkanäle 14 des Schaftführungsabschnitts 12a (s. Fig. 5) nähert sich gegen 0, d.h. die Tiefe der Schaftstaubkanäle 14 nähert sich mit zunehmendem Abstand vom Schaftübergangsabschnitt 11 der Außenwand des Schaftführungsabschnitts 12a an.

Nachfolgend wird zur weiteren Erläuterung zusätzlich auf die Fig. 2 bis 5 Bezug genommen. Die Fig. 2 zeigt den Meißel gemäß Fig. 1 in einer schematischen Seitenansicht.

Wie insbesondere aus der Figur 2 in Kombination mit Fig. 3 (welche eine schematische Darstellung der Querschnittsfläche entlang A-A aus Fig. 2 ist) zu entnehmen ist, weist der Arbeitsführungsabschnitt 33 vier Arbeitsabschnittstaubkanäle 34 auf, die als Rillen 35 ausgebildet sind. Die Rillen 35 sind als Vertiefung im Material des Arbeitsabschnitts 30 ausgebildet. Die Vertiefung beträgt eine Tiefe t3 im Bezug zur Außenwand des Arbeitsführungsabschnitts 33a. Die Arbeitsabschnittstaubkanäle 34 erstrecken sich in Längsrichtung der Längsachse L. Die Arbeitsstaubkanäle 34 sind seitlich entlang der Längsrichtung der Längsachse L durch zwei Seitenwände 34a, 34b begrenzt. In einem Übergangsbereich der Seitenwände 34a, 34b zur Außenwand des Arbeitsführungsabschnitts 33a ist im vorliegenden Ausführungsbeispiel am Arbeitsführungsabschnitt 33 eine Erhöhung 37 ausgebildet. Die Erhöhung 37 ergibt sich durch bei der Herstellung der Arbeitsabschnittstaubkanäle 34 verdrängtes Material. Vorliegend wurde zur Herstellung ein Prägeverfahren verwendet, bei der ein Prägestempel in das Material des Arbeitsabschnitts 30 eingepresst wird, das Material des Arbeitsabschnitts 30 teilweise komprimiert, jedoch insbesondere Material durch den Prägestempel verdrängt wird und dieses sich seitlich als Erhöhung 37 anhäuft. Die Erhöhung 37 erhebt sich gegenüber der Außenwand des Arbeitsführungsabschnitts 33a um eine dritte Erhöhung h3. Der Arbeitsführungsabschnitt 33 weist im Bereich der Außenwand des Arbeitsführungsabschnitts 33a einen zweiten Außendurchmesser des Arbeitsführungsabschnitts d3 auf.

Aus Fig. 4, welche eine schematische Darstellung der Querschnittsfläche entlang B-B aus Fig. 2 ist, ist zu erkennen, dass der Schaftführungsabschnitt 12 ähnlich dem Arbeitsführungsabschnitt 33 vier Staubkanäle, nämlich vier Schaftstaubkanäle 14 in Form von Schaftführungsstaubkanäle 14a aufweist. Die Schaftführungsstaubkanäle 15 erstrecken sich als Rillen entlang der Längsrichtung der Längsachse L und sind als Vertiefung im Material des Schafts 10 ausgebildet. Die Schaftführungsstaubkanäle 15 sind seitlich entlang der Längsrichtung der Längsachse L durch zwei Seitenwände 15a, 15b begrenzt. In einem Übergangsbereich der Seitenwände 15a, 15b der Schaftführungsstaubkanäle 15 zur Außenwand des Schaftführungsabschnitts 12a ist im vorliegenden Ausführungsbeispiel am Schaft 10 eine Erhöhung 17 ausgebildet. Die Erhöhung 17 des Schafts 10 ergibt sich wie die Erhöhung 37 des Arbeitsabschnitts 30 durch den Herstellungsprozess der Schaftführungsstaubkanäle 15 mittels Prägen. Die Erhöhung 17 erhebt sich gegenüber der Außenwand des Schaftführungsabschnitts 12a um eine erste Erhöhung h1. Der Schaftführungsabschnitt 12 weist im Bereich der Außenwand des Schaftführungsabschnitts 12a einen ersten Außendurchmesser des Schaftführungsabschnitts d1 auf.

Der Schaftübergangsabschnitt 11 verbindet den Arbeitsführungsabschnitt 33 mit dem Schaftführungsabschnitt 12. Der Schaftübergangsabschnitt 11 weist eine den Meißel nach Außen begrenzende Außenwand des Schaftübergangsabschnitts 11a auf. Der Schaftübergangsabschnitt 11 weist analog dem Schaftführungsabschnitt 12 vier Schaftstaubkanäle 14 in Form von Schaftübergangstaubkanäle 16 auf (s. in Kombination mit Fig. 5, welche eine schematische Darstellung der Querschnittsfläche entlang C-C aus Fig. 2 ist). Die Schaftübergangsstaubkanäle 16 erstrecken sich rillenartig entlang der Längsrichtung der Längsachse L und sind als Vertiefung im Material des Schafts 10 im Bereich des Schaftführungsabschnitts 12 ausgebildet. Die Schaftübergangstaubkanäle 16 sind seitlich entlang der Längsrichtung der Längsachse L durch zwei Seitenwände 16a, 16b begrenzt. In einem Übergangsbereich der Seitenwände 16a, 16b der Schaftübergangstaubkanäle 16 zur Außenwand des Schaftübergangsabschnitts 11a ist in diesem Ausführungsbeispiel am Schaft 10 bzw. am Schaftübergangsabschnitt 11 ebenfalls jeweils die Erhöhung 17 ausgebildet, die sich somit seitlich zu den Schaftübergangstaubkanälen 16 in deren Längserstreckung erstreckt. Die Erhöhung am Schaftübergangsabschnitt 11 ergibt sich vorliegend ebenfalls durch den Herstellungsprozess, nämlich Prägen. Die zweite4 Erhöhung h2 am Schaftübergangsabschnitt ist als Abstand gegenüber der Außenwand des Schaftübergangsabschnitts 11a festgelegt.

Wie insbesondere aus Fig. 2 ersichtlich, ist der Außendurchmesser des Schaftführungsabschnitts d1 größer als der Außendurchmesser des Arbeitsführungsabschnitts d3. Der Schaftübergangsabschnitt 11 verbindet den Arbeitsführungsabschnitt 33 mit den Schaftführungsabschnitt 12. Die Außenwand des Schaftübergangsabschnitts 11a bildet dabei einen Übergang zwischen der Außenwand des Arbeitsführungsabschnitts 33a mit der Außenwand des Schaftführungsbereichs 33. Aufgrund der Differenz zwischen Außendurchmesser des Arbeitsführungsabschnitts d3 und dem Außendurchmesser des Schaftführungsabschnitts d1 variiert der Außendurchmesser des Schaftübergangsabschnitts d2 entlang der Längserstreckung der Längsachse L von d3 bis d1 in Richtung vom Arbeitsführungsabschnitt 33 zum Schaftführungsabschnitt 11 hin. Somit entspricht das Maß des Außendurchmessers des Schaftübergangsabschnitts d2 an der Grenze zum Arbeitsführungsabschnitt 33 dem Außendurchmesser des Arbeitsführungsabschnitts d3. Weiterhin entspricht das Maß des Außendurchmessers des Schaftübergangsabschnitts d2 an der Grenze zum Schaftführungsabschnitt 11 dem Außendurchmesser des Schaftführungsabschnitts d1.

Grundsätzlich ist vorgesehen, dass die Außenwand des Schaftübergangsabschnitts 11a keinen Bereich aufweist, der im Bezug zur Längsachse L des Meißels wenigstens 90° aufweist. Vorliegend beträgt die Steigung der Außenwand des Schaftübergangsabschnitts 11a konstant 8°. Vorzugsweise beträgt die Steigung zwischen 4° und 15°.

Die Arbeitsabschnittstaubkanäle 34 und die Schaftstaubkanäle 14 sind korrespondierend ausgebildet, d.h. dass die Schaftstaubkanäle 14 entsprechend durch die vier Schaftstaubkanäle 14 fortgeführt werden. Die vier Schaftstaubkanäle 14 umfassen jeweils einen Schaftübergangskanal 16 der durch einen der vier Schaftführungskanal 15 fortgeführt wird. Die vier Arbeitsabschnittstaubkanäle 34 und Schaftstaubkanäle sind 14 sind gleichmäßig radial an der Außenwand des Arbeitsführungsabschnitts 33a sowie an der Außenwand des Schafts 10 verteilt angeordnet.

Der Meißel 1 ist mehrteilig ausgeführt, nämlich aus einem ersten Teil, welcher durch den Arbeitsabschnitt 30 ausgebildet ist, und einen zweiten Teil, welcher durch den Schaft 10 und Verbindungsabschnitt 20 ausgebildet ist. Der Arbeitsabschnitt 30 ist über eine Schweißzone 40 mittels Reibschweißen mit dem Schaft 10 verbunden.

Weiterhin ist der Arbeitsabschnitt 30, insbesondere der Arbeitsendbereich 32, aus einem Material ausgebildet, das in einem Temperaturbereich von wenigstens 0°C bis 250°C, insbesondere von 0°C bis 500°C eine gleichbleibende Härte aufweist. Ein solches Material ist insbesondere ein hochlegierter martensitischer Chromstahl, vorzugsweise mit Molybdän und/ oder Vanadium als Legierungselemente.

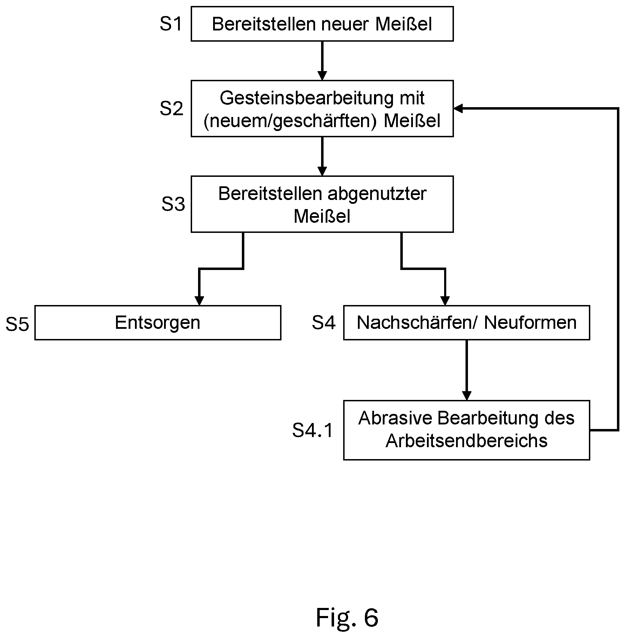

In der Fig. 6 ist skizzenhaft ein Verfahren zur Verwendung eines Meißels, umfassend ein Verfahren zum Nachschärfen eines Meißels, dargestellt.

Ausgangspunkt S1 des Verfahrens zur Verwendung ist ein Bereitstellen eines neuen Meißels. Der Meißel ist wie oben beschrieben ausgebildet. Dies bedeutet, dass der Meißel einen Arbeitsabschnitt aufweist, dessen Härte in einem Temperaturbereich von 0°C bis wenigstens 250°C, vorzugsweise von 0°C bis 500°C, während einer Temperatureintragsdauer von wenigstens 30s, vorzugsweise von wenigstens 120s, im Wesentlichen gleichbleibt.

In einem nachfolgenden Schritt wird der neue Meißel aus S1 im Schritt S2 zur Bearbeitung von Gestein, insbesondere Mauerwerk wie Beton oder Ziegel, an wenigstens einer Baustelle eingesetzt. Dabei wird der Meißel in der Regel in eine Werkzeugmaschine eingespannt. Die Werkzeugmaschine beaufschlagt den Meißel, um eine translatorische Bewegung entlang seiner Längsachse auszuführen. Dazu gibt die Werkzeugmaschine einen Kraftimpuls auf seine Schlagfläche (z. B. s. Schlagfläche 22 in Fig. 2) und beschleunigt den Meißel zu einer Bewegung in Richtung des Arbeitsendbereichs (z. B. s. Arbeitsendbereich 32 in Fig. 2), so dass der Kraftimpuls als Schlagimpuls auf das zu bearbeitende Material (Gestein) übertragen wird. Somit wird der Arbeitsendbereich besonders beansprucht. Während eine bewusste Schädigung des zu bearbeitenden Materials vorgenommen wird, wird der Arbeitsendbereich ungewollt beschädigt, insbesondere verformt. Zumindest der Bereich des Arbeitsendbereichs, der mit dem zu bearbeitenden Material zu dessen Bearbeitung in Kontakt kommt, wird durch die Bearbeitung des Gesteins verformt, abgeflacht und/ oder abgeschabt. Der Meißel wird damit abgenutzt, so dass im Schritt S3 ein abgenutzter Meißel vorliegt.

Ist die Abnutzung des Meißels in einem Grad, dass eine weitere Bearbeitung des Materials nicht wie beabsichtigt durchgeführt werden kann, d.h. die Bearbeitungsqualität und Bearbeitungszeit entspricht nicht dem Maße, welche von einem Arbeiter gewünscht wird, muss entschieden werden, ob gemäß Schritt S4 ein Nachschärfen durchgeführt werden kann bzw. soll. Ist ein Nachschärfen gemäß Schritt S4 nicht mehr möglich oder wirtschaftlich nicht sinnvoll, wird der Meißel gemäß Schritt S5 entsorgt.

Während des Schritts S4, dem Nachschärfen, wird der Arbeitsendbereich des Meißels im Teilschritt S4.1 mechanisch abrasiv nachgeschärft. Dabei wird der Arbeitsendbereich, insbesondere der Bereich des Arbeitsendbereichs, der mit dem zu bearbeitenden Material während der Bearbeitung in Kontakt kommt, relativ zur Oberfläche eines Schleifelements, beispielsweise Schleifstein, bewegt. Dabei kann der Meißel und/ oder das Schleifelements bewegt werden. Beispielsweise ist das Schleifelement eine rotierende Schleifscheibe mit einer radialen Außenkante und zwei sich senkrecht zur Rotationsachse erstreckende Grundflächen. Der Arbeitsendbereich des Meißels kann beispielsweise an der rotierenden Außenfläche oder an einer der rotierenden Grundflächen angelegt werden. Das Schleifelement weist eine raue Oberfläche auf, so dass aufgrund Reibung mit dem Arbeitsendbereich des Meißels Material davon abgetragen wird.

Diese Reibung bewirkt eine lokale Erwärmung, was einen Temperatureintrag von bis zu 500°C, vorzugsweise maximal von 250°C, zur Folge hat. Bei Meißel des Standes der Technik bewirkt eine solche Erwarmung ein Abnehmen der Härte des Materials am Arbeitsendbereich. Der im Schritt S1 bereitgestellte erfindungsgemäße Meißel weist jedoch ein Material auf, bei dem die Härte über einem Temperaturbereich von 0°C bis wenigstens 250°C, vorzugsweise von 0°C bis 500°C, während einer Temperatureintragsdauer von wenigstens 30s, vorzugsweise von wenigstens 120s, im Wesentlichen gleichbleibt. Der Temperatureintrag beim Nachschärfen dauert in der Regel weniger als 30s. Somit ist durch das Nachschärfen und damit Neuformen des Meißels im Schritt S4 keine Verringerung der Härte an dem Arbeitsendbereich gegeben.

Sofern der Meißel der gewünschten (erneuerten) Form entspricht, wird nach der abrasiven Bearbeitung des Arbeitsendbereichs dieser wieder zur erneuten Verwendung zur meißelnden Bearbeitung von Material wie Gestein als geschärfter Meißel, d.h. dem Schritt S2, bereitgestellt.

Während Meißel des Standes der Technik bei jedem Nachschärfen an Härte verlieren, nutzt sich der Meißel immer schneller ab. Die Verwendungsdauer eines solchen bisherigen Meißels verringert sich stetig. Damit geht auch einher, dass das Material des Arbeitsendbereichs sehr schnell abnimmt, bis kein Nachschärfen möglich wäre. Mit dem vorliegenden Verfahren und dem erfindungsgemäßen Meißel wird die Härte des Arbeitsendbereichs konstant gehalten, selbst nach mehrmaligem Nachschärfen, beispielsweise drei bis zehn Mal. Somit ist auch für die zukünftige Verwendung kein zunehmender Grad an Abnutzung gegeben. Der Meißel kann damit länger verwendet werden, wodurch der Meißel und das vorliegend beschriebene Verfahren nachhaltiger gegenüber dem Stand der Technik ist.

Darüber hinaus ist gemäß dem Verfahren kein Temperieren vor dem Nachschärfen sowie kein Temperieren nach dem Nachschärfen vorgesehen, da aufgrund des bereitgestellten Meißels kein zusätzlicher Schritt zum Bereitstellen eines nachgeschärften Meißels mit ausreichender Härte notwendig ist. Entsprechende Energie und Material sowie Betriebsmittel können eingespart bzw. weggelassen werden.

Auch aus diesem Aspekt ist das erfindungsgemäße Verfahren wie in der Fig. 6 dargestellt nachhaltig gegenüber einem bisherigen Verfahren zum Nachschärfen und zur Verwendung eines Meißels des Standes der Technik.

In den Figuren dargestellten und hier beschriebenen Ausführungsformen sind nur beispielhaft. Es versteht sich selbst, dass eine Kombination von Merkmalen verschiedener Ausführungsformen, sofern von den Patentansprüchen abgedeckt, möglich ist.

### Bezugszeichenliste

- 1: Meißel
- 10: Schaft
- 11: Schaftübergangsabschnitt
- 11a: Außenwand des Schaftübergangsabschnitts
- 12: Schaftführungsabschnitt
- 12a: Außenwand des Schaftführungsabschnitts
- 14: Schaftstaubkanäle
- 15: Schaftführungsstaubkanäle
- 15a, 15b: Seitenwände
- 16: Schaftübergangstaubkanäle
- 16a, 16b: Seitenwände
- 17: Erhöhung
- 20: Verbindungsabschnitt
- 22: Schlagfläche
- 23: Einsteckbereich
- 30: Arbeitsabschnitt
- 31: freies Ende
- 32: Arbeitsendbereich
- 33: Arbeitsführungsabschnitt
- 33a: Außenwand des Arbeitsführungsabschnitts
- 34: Arbeitsabschnittstaubkanäle
- 34a, 34b: Seitenwände
- 35: Rille
- 37: Erhöhung
- 38: Seitenflächen
- 39: Spitze
- 40: Schweißzone
- d1: erster Außendurchmesser des Schaftführungsabschnitts
- d2: dritter Außendurchmesser des Schaftübergangsabschnitts
- d3: zweiter Außendurchmesser des Arbeitsführungsabschnitts
- h1: erste Erhöhung
- h2: zweite Erhöhung
- h3: dritte Erhöhung
- L: Längsachse
- t1: erste Tiefe des Schaftführungsabschnitts
- t2: zweite Tiefe des Schaftführungsabschnitts
- t3: dritte Tiefe des Schaftübergangsabschnitts

## Patentansprüche

1. Meißel (1) umfassend;
einen Schaft (10), der sich entlang einer Längsachse (L) erstreckt,
einen Verbindungsabschnitt (20), der an einem ersten Ende des Schafts (10) angeordnet und
einen Arbeitsabschnitt (30), der an einem zweiten Ende des Schafts (10) angeordnet ist, das dem ersten Ende des Schafts (10) gegenüber liegt, wobei die Längsachse (L) durch den Verbindungsabschnitt (20), den Schaft (10) und den Arbeitsabschnitt (30) verläuft; wobei
der Arbeitsabschnitt (30) einem Arbeitsendbereich (32) und einen Arbeitsführungsabschnitt (33) aufweist, wobei der Arbeitsendbereich (32) an einem Ende des Arbeitsabschnitts (30) angeordnet ist, welches dem Schaft (10) gegenüberliegt, der Arbeitsendbereich (32) in Erstreckung der Längsachse (L) in einer ersten Richtung vom Schaft (10) an einem freien Ende (31) des Arbeitsabschnitts (30) mit verjüngender Querschnittsfläche ausgebildet ist; und der Arbeitsführungsabschnitt (33) zwischen dem Arbeitsendbereich (32) und dem Schaft (10) angeordnet ist;
der Schaft (10) einen Schaftführungsabschnitt (12) und einen Schaftübergangsabschnitt (11) aufweist, wobei
der Schaftübergangsabschnitt (11) an einem Ende des Schafts in Längsrichtung der Längsachse (L) zum Arbeitsabschnitt (30) ausgebildet ist und der Schaftführungsabschnitt (12) zwischen dem Schaftübergangsabschnitt (11) und dem Verbindungsabschnitt (20) ausgebildet ist und den Schaftführungsabschnitt (12) mit dem Arbeitsführungsabschnitt (33) verbindet;
der Arbeitsabschnitt (30) wenigstens zwei Arbeitsabschnittstaubkanäle (34) aufweist, die sich jeweils als Rille (35) in Längserstreckung der Längsachse (L) des Arbeitsabschnitts (30) erstrecken; und
der Schaft (10) zumindest zwei Schaftstaubkanäle (14) aufweist, die sich zumindest partiell über den Schaft (10) in Längserstreckung der Längsachse (L) erstrecken, wobei die Schaftstaubkanäle (14) jeweils korrespondierend zu den Arbeitsabschnittstaubkanäle (34) ausgebildet sind und ineinander fluchten.

2. Meißel (1) nach Anspruch 1, **dadurch gekennzeichnet, dass**
Der Schaft (10) am Schaftübergangsabschnitt (11) Schaftübergangsstaubkanäle (16) und am Schaftführungsabschnitt (12) Schaftführungsstaubkanäle (15) aufweist, wobei die Schaftübergangsstaubkanäle (16) korrespondierend zu den Schaftführungsstaubkanälen (15) ausgebildet sind und zu diesen fluchtend verlaufen, wobei die Schaftübergangsstaubkanäle (16) in Längserstreckung der Längsachse (L) sich über eine Außenwand des Schaftübergangsabschnitts (11a) erstrecken und die Schaftführungsstaubkanäle (15) sich zumindest partiell über eine Außenwand des Schaftführungsabschnitts (12a) erstrecken.

3. Meißel (1) nach einem der Ansprüche 1 oder 2, **dadurch gekennzeichnet, dass**
ein erster Außendurchmesser (d1) des Schaftführungsabschnitts (12) größer ist als ein zweiter Außendurchmesser (d2) des Arbeitsführungsabschnitts (33) und die Außenwand (11a) des Schaftübergangsabschnitts (11) ausgebildet ist, die Außenwand (12a) des Schaftführungsabschnitts (12) mit einer Außenwand (33a) des Arbeitsführungsabschnitts (33) zu verbinden, wobei ein dritter Außendurchmesser (d3) des Schaftübergangsabschnitts (11) vom Schaftführungsabschnitt (12) zum Arbeitsführungsabschnitt (33) in Richtung vom Schaftführungsabschnitt (12) zum Arbeitsführungsabschnitt (33) variabel ausgebildet ist und sich verkleinert; und wobei eine größte Steigung der Außenwand des Schaftübergangsabschnitts (11a) vom Arbeitsabschnitt (30) zum Schaftführungsabschnitt (12) gegenüber der Längsachse (L) des Meißels (1) kleiner als 90°, insbesondere kleiner als 45°, beträgt.

4. Meißel (1) nach einem der vorhergehenden Ansprüche, **dadurch gekennzeichnet, dass** der Arbeitsabschnitt (30) wenigstens zwei Arbeitsabschnittstaubkanäle (34) aufweist, die sich jeweils als Rille (35) in Längserstreckung der Längsachse (L) des Arbeitsabschnitts (30) erstrecken.

5. Meißel (1) nach einem der vorhergehenden Ansprüche, **dadurch gekennzeichnet, dass** die wenigstens zwei Arbeitsabschnittstaubkanäle (34) des Arbeitsabschnitts (30) als Vertiefung an der Außenwand des Arbeitsabschnitts (30) ausgebildet sind.

6. Meißel (1) nach einem der vorhergehenden Ansprüche, **dadurch gekennzeichnet, dass** eine erste Querschnittsfläche des Arbeitsführungsabschnitts (33) senkrecht zur Längsachse (L) maximal 90% einer zweiten Querschnittsfläche des Schafts (10) senkrecht zur Längsachse (L) beträgt.

7. Meißel (1) nach einem der vorhergehenden Ansprüche, **dadurch gekennzeichnet, dass** die Außenfläche des Arbeitsabschnitts (30) und/ oder des Schafts (10) in einem Übergangsbereich der jeweiligen Staubkanäle (34, 14) an ihren in Längserstreckung der Längsachse (L) erstreckenden Rändern eine wulstartige Erhöhung (37, 17) aufweisen.

8. Meißel nach einem der vorhergehenden Ansprüche, **dadurch gekennzeichnet, dass** die wulstartige Erhöhung wenigstens 10% einer maximalen Tiefe der Staubkanäle entspricht.

9. Meißel (1) nach einem der vorhergehenden Ansprüche, **dadurch gekennzeichnet, dass** der Arbeitsendbereich (32) des Arbeitsabschnitts (30) eine Spitze aufweist, insbesondere als eine pyramidenförmige Spitze ausgebildet ist, wobei die Spitze auf der Längsachse (L) von dem Verbindungsabschnitt (20) weggerichtet ist.

10. Meißel (1) nach einem der vorhergehenden Ansprüche, **dadurch gekennzeichnet, dass** der Arbeitsendbereich (32) des Arbeitsabschnitts (30) als Pyramidenstumpf, ausgebildet ist.

11. Meißel (1) nach einem der vorhergehenden Ansprüche, **dadurch gekennzeichnet, dass** der Arbeitsabschnitt (30) ein Material aufweist, das eine gleichbleibende Härte in einem Temperaturbereich von wenigstens 0°C bis 250°C aufweist, insbesondere eine gleichbleibende Härte in einem Temperaturbereich von 0°C bis 500°C aufweist.

12. Meißel (1) nach einem der vorhergehenden Ansprüche, **dadurch gekennzeichnet, dass** der Arbeitsabschnitt (30) nachschleifbar ausgebildet ist, wobei nach wenigstens drei Nachschleifvorgänge des Arbeitsabschnitts (30) und/ oder nach wenigstens einem Termperatureintrag am Arbeitsabschnitt (30) von maximal 500°C seine Härte in einem Toleranzbereich von 10% beibehält.

13. Meißel (1) nach einem der vorhergehenden Ansprüche, **dadurch gekennzeichnet, dass** der Arbeitsabschnitt (30) und der Schaft (10) mittels Schweißen, insbesondere Reibschweißen an einer Schweißzone (40) miteinander verbunden sind.
